# EUROPÄISCHE PATENTSCHRIFT

(11) **EP 2 554 091 B1**
(45) Veröffentlichungstag und Bekanntmachung des Hinweises auf die Patenterteilung: **08.03.2017**
(21) Anmeldenummer: 11186577.0
(22) Anmeldetag: 25.10.2011
(51) Int. Cl.: A47L 15/42, B32B 3/24, B32B 5/18, B32B 11/00, G10K 11/168

(54) **SCHALLDÄMPFENDE SANDWICHPLATTE MIT PERFORATION**
ACOUSTIC BAFFLING SANDWICH BOARD WITH PERFORATION
PLAQUE EN SANDWICH INSONORISÉE DOTÉE D'UNE PERFORATION

(30) Priorität: 01.08.2011 DE 202011103900 U
(43) Veröffentlichungstag der Anmeldung: 06.02.2013
(73) Patentinhaber: Faist Chem Tec GmbH, 67547 Worms (DE); BSH Hausgeräte GmbH, 81739 München (DE)
(72) Erfinder: Polak, Josef, 55294 Bodenheim (DE); Obst, Heike-Ursula, 67551 Worms (DE); Hardt, Christian, 65451 Kelsterbach (DE); Vidovic, Rudolf, 67227 Frankenthal (DE); Lieutenant, Bernd, 54314 Baldringen (DE); Becker, Jean-Georges, 67551 Worms (DE); Fritz, Heiko, 89542 Herbrechtingen (DE); Schwenk, Bernd, 89415 Lauingen (DE)
(74) Vertreter: Müller Schupfner & Partner Patent- und Rechtsanwaltspartnerschaft mbB

(56) Entgegenhaltungen:
- EP-A2- 2 221 433
- US-A1- 2003 040 547
- US-A1- 2004 023 587

## Beschreibung

Die Erfindung betrifft eine schalldämpfende Sandwichplatte gemäß dem Oberbegriff des Anspruchs 1, eine Schalldämpfungs- und/oder Schalldämmungsschicht und eine Thermoisolierschicht nach Anspruch 9 bzw. 10, eine Geschirrspülmaschine nach Anspruch 11 und ein Verfahren zur Herstellung einer schalldämpfenden Sandwichplatte gemäß dem Oberbegriff des Anspruchs 12.

Eine derartige Sandwichplatte, die auch als schalldämmende Sandwichplatte bezeichnet werden kann, ist in der EP 0 933 194 A2 offenbart. Eine derartige schalldämpfende Sandwichplatte mit einer Schalldämpfungsschicht und einer Wärmedämmungsschicht kann auf vielfache Weise zur Verbesserung der akustischen Eigenschaften von Bauteilen eingesetzt werden. Hierzu gehört beispielsweise das Entdröhnen eines Bodenblechs, von Seitenwänden oder des Dachbereichs eines Kraftfahrzeugs und das Entdröhnen der Wandungen eines Spülbottichs bzw. Spülbehälters einer Geschirrspülmaschine. In der Regel wird eine derartige Sandwichplatte mit ihrer Wärmedämmungsschicht auf das akustisch zu verbessernde Bauteil, wie beispielsweise ein Bodenblech oder einen Spülbottich, geklebt.

Insbesondere bei Geschirrspülmaschinen tritt das Problem auf, dass die Wandungen ihres Spülbottichs zu erheblichen Eigenschwingungen neigen, so dass eine Schwingungsdämpfung unverzichtbar ist. Im Betrieb der Geschirrspülmaschine entsteht jedoch im Spülbottich nicht nur Körperschall, sondern auch Luftschall, dessen Austritt durch eine Schalldämmung ebenfalls reduziert werden soll. Zusätzlich besteht die sich immer weiter verschärfende Anforderung, die Spülbottiche von Geschirrspülmaschinen auch thermisch zu isolieren, um den Energieverbrauch beim Spülen möglichst gering zu halten. Hierbei ist zu beachten, dass in der Regel Schichten zur Schalldämpfung kombiniert mit Schalldämmung funktionsbedingt ein möglichst hohes spezifisches Gewicht aufweisen sollten und üblicherweise eine relativ hohe Wärmekapazität besitzen. Dabei sind diese Schalldämpfungsschichten üblicherweise relativ schlechte Wärmeisolatoren.

US 2003-0040547 A1 offenbart ebenfalls eine gattungsgemäße Sandwichplatte mit einer zweiten Schicht aus geschäumtem Material, das jedoch "Löcher" aufweist, die zumindest in Richtung der ersten Schicht offen sind, um tiefere Frequenzen zu dämpfen, als eine entsprechende Schicht ohne Löcher.

US 2004-0023587 A1 offenbart ebenfalls eine solche zweite Schicht, die ebenfalls zur Schalldämpfung eingesetzt wird und die eine durchgehende Perforation aufweist, die die zweite Schicht vollständig durchsetzt. Dadurch sollen insbesondere tiefere Frequenzen gedämpft werden.

EP 2 221 433 A2 betrifft einen Schichtaufbau für einen Bodenbelag, aufweisend zwei Lagen, die jedoch nicht dazu bestimmt sind mit einem akustisch zu verbessernden Bauteil verbunden zu werden, sondern die der Trittschalldämmung dienen sollen. Auch hier hat die zweite Schicht eine durchgehende Perforierung.

Der Erfindung liegt die Aufgabe zugrunde, die eingangs genannte schalldämpfende und/oder schalldämmende Sandwichplatte so weiterzubilden, dass ihre thermische Isolierfähigkeit verbessert werden kann, ohne dass ihre Schalldämpfungs- und/oder Schalldämmungseigenschaften darunter leiden. Ferner liegt der Erfindung die Aufgabe zugrunde, ein Verfahren zur Herstellung einer solchen schalldämpfenden und/oder schalldämmenden Sandwichplatte anzugeben.

Diese Aufgaben werden erfindungsgemäß mit einer schalldämpfenden und/oder schalldämmenden Sandwichplatte gemäß Anspruch 1, einer Schalldämpfungs- und/oder Schalldämmungsschicht und einer Thermoisolierschicht nach Anspruch 9 bzw. 10 bzw. einem Verfahren zur Herstellung einer schalldämpfenden Sandwichplatte gemäß Anspruch 11 gelöst. Vorteilhafte Weiterbildungen der Erfindung sind Gegenstand der abhängigen Ansprüche.

Erfindungsgemäß weist die schalldämpfende und/oder schalldämmende Sandwichplatte eine der Schalldämpfung und/oder der Schalldämmung dienende erste Schicht sowie eine der thermischen Isolierung dienende zweite Schicht auf. Die zweite Schicht ist dabei mit einer Flächenseite, die als erste Hauptseite bezeichnet wird, mit der ersten Schicht fest verbunden. Die zweite Flächenseite (als zweite Hauptseite bezeichnet) der zweiten Schicht ist dagegen dafür bestimmt, mit dem Bauteil verbunden zu werden, das akustisch zu verbessern, also hinsichtlich der Schallausbreitung zu bedämpfen bzw. zu dämmen, ist. Die vorliegende Erfindung zeichnet sich dadurch aus, dass die zweite Schicht eine Perforierung aufweist. Die zweite Schicht weist eine Vielzahl von Hohlräumen auf oder ist gelocht und weist eine Vielzahl von Hohlräumen auf. Unter "Perforation" versteht die vorliegende Erfindung also auch Hohlräume im Inneren der Schicht, die von außen nicht sichtbar und größer als die (offen- oder geschlossenzelligen) Poren sind, die ein Schaum in der Regel aufweist. Dadurch wird zum einen das spezifische Gewicht reduziert, wodurch einerseits die spezifische Wärmekapazität vermindert wird und andererseits auch die Wärmedurchgangswerte vermindert werden, da sich in den Perforierungen bzw. den Hohlräumen ein Gas wie bspw. Luft befindet, die gut thermisch isoliert. Die Schalldämpfungs- und/oder - dämmungseigenschaften der Sandwichplatte werden hierdurch jedoch nicht beeinträchtigt, da die erste Schicht zur Schalldämmung und/oder zur Schalldämpfung gegenüber der eingangs beschriebenen Sandwichplatte unverändert ist.

Gemäß einer vorteilhaften Weiterbildung der Erfindung umfasst die Perforierung zusätzlich ein die Schicht durchdringendes Loch oder eine Vielzahl von Durchgangslöchern, welche die zweite Schicht in der Erstreckungsrichtung von der ersten Schicht zum Bauteil vollständig durchsetzen. In anderen Worten durchdringen die Durchgangslöcher die zweite Schicht über ihre ganze Höhe bzw.

Dicke, also quer zu ihrer Flächenausdehnung bzw. -erstreckung. Derartige Durchgangslöcher können in einfacher Weise durch Ausschneiden oder Ausstanzen in die zweite Schicht eingebracht werden.

Es ist nach der Erfindung von Vorteil, wenn die zweite Schicht geschäumtes Material mit Poren aufweist und die Perforierung wiederum geschlossene Hohlräume umfasst, die größer als die Poren sind. Auf diese Weise kann das spezifische Gewicht der zweiten Schicht reduziert und damit einhergehend die Wärmeleitfähigkeit herabgesetzt werden, was eine Verbesserung der thermischen Isolationseigenschaften zur Folge hat.

Einen besonders guten Kompromiss zwischen mechanischer Stabilität der Sandwichplatte und guten thermischen Isolationseigenschaften kann man erzielen, wenn die zweite Schicht so ausgestaltet wird, dass die Perforierung 20 bis 60 %, vorzugsweise 30 bis 50 % und insbesondere etwa 40 % des Gesamtvolumens der zweiten Schicht ausmacht.

Bei den nachstehenden %-Angaben von Materialzusammensetzungen handelt es sich jeweils um Angaben in Gewichts-%, außer wenn es anders angegeben ist.

Es kann von Vorteil sein, wenn die Sandwichplatte so ausgestaltet ist, dass die erste Schicht eine Bitumenzusammensetzung aus ca. 15 % Bitumen, ca. 0,5 % Ethylenvinylacetat (EVA), ca. 1,0 % Low-Density-Polyethylen (LDPE), ca. 0,5 % Sepiolith, ca. 41 % Calciumcarbonat, ca. 2,0 % Calciumoxid und ca. 40 % Eisenoxid eine Schichtdicke von 0,5 bis 2 mm, vorzugsweise 0,7 bis 1,2 mm und insbesondere etwa 0,9 mm, und ein Flächengewicht von 1 bis 3 kg/m², vorzugsweise 1,5 bis 2,5 kg/m² und insbesondere etwa 2 kg/m², aufweist oder dass die erste Schicht mit dieser, d.h. derselben Bitumenzusammensetzung, aber eine Schichtdicke von 1,0 bis 3,0 mm, vorzugsweise 1,5 bis 2,5 mm und insbesondere etwa 2 mm, und ein Flächengewicht von 2 bis 5 kg/m², vorzugsweise 3 bis 4 kg/m² und insbesondere etwa 3,6 kg/m², aufweist.

Alternativ oder zusätzlich kann es von Vorteil sein, wenn die erste Schicht Aluminium von 0,05 bis 0,5 mm, vorzugsweise 0,1 bis 0,3 mm und insbesondere etwa 0,2 mm, Dicke und/oder eine thermoplastische oder duroplastische Versteifungsschicht von 0,05 bis 1,0 mm, vorzugsweise 0,1 bis 0,8 mm und insbesondere etwa 0,3 mm, Dicke aufweist. In anderen Worten können Aluminium und die Versteifungsschicht alternativ für die Herstellung der ersten Schicht oder zusätzlich als eine Komponente zur Herstellung der ersten Schicht verwendet werden.

Weiterhin kann es von Vorteil sein, die Sandwichplatte so auszugestalten, dass die zweite Schicht ca. 50 % Bitumen, ca. 35 % Silikat-Hohlkugeln, ca. 5,0 % Zellulosefaser, ca. 5,0 % Calciumoxid und ca. 5,0 % Ethylenvinylacetat eine Schichtdicke von 2 bis 6 mm, vorzugsweise 3 bis 5 mm und insbesondere etwa 4,2 mm, und ein Flächengewicht von 2 bis 5 kg/m², vorzugsweise 3 bis 4 kg/m² und insbesondere etwa 3,5 kg/m², aufweist, oder dass die zweite Schicht Polystyrol und/oder Polyvinylacetat und/oder PE und/oder PP und/oder Ethylenvinylacetat, insbesondere aus ca. 40 % Polystyrol, ca. 30 % Silikat-Hohlkugeln, ca. 10 % Zellulosefasern, ca. 19 % Weichmacher und ca. 1,0 % Stabilisator, eine Schichtdicke von 2 bis 7 mm, vorzugsweise 3 bis 6 mm und insbesondere etwa 4,5 mm, und ein Flächengewicht von 1 bis 3 kg/m², vorzugsweise 1,5 bis 2,5 kg/m² und insbesondere etwa 1,9 kg/m², aufweist.

Alternativ oder zusätzlich ist es außerdem möglich, für die zweite Schicht einen PE-Schaum oder einen Bitumen-Schaum zu verwenden. Außerdem kann für die zweite Schicht eine Bitumenzusammensetzung aus ca. 80 %Bitumen, ca. 10 % Zellulosefaser, ca. 5,0 % Calciumoxid und ca. 5,0 % Ethylenvinylacetat (EVA) verwendet werden. Diese Varianten sind zwar nach derzeitigem Entwicklungsstand aus Kosten- oder Produktionsgründen nicht bevorzugt, können aber in bestimmten Fällen zur Optimierung der Wärmeisolationseigenschaften verwendet werden.

Weiterhin kann es Vorteile bringen, wenn bei der Ausgestaltung der Sandwichplatte alternativ oder zusätzlich die zweite Schicht eine Akustikfolie aus ca. 50 % Bitumen, ca. 10 % Sepiolith, ca. 5 % Silikat-Hohlkugeln, ca. 30 % Ethylenvinylacetat (EVA) und ca. 5 % Calciumoxid mit einer Schichtdicke von 3 bis 12 mm, vorzugsweise 6 bis 9 mm und insbesondere etwa 7,5 mm, und einem Flächengewicht von 3 bis 6 kg/m², vorzugsweise 4 bis 5 kg/m² und insbesondere etwa 4,52 kg/m², aufweist und/oder eine Bitumen-Leichtfolie aus ca. 40 % Bitumen, ca. 20 % Calciumcarbonat, ca. 2,0 % Sepiolith, ca. 20 % Glimmer, ca. 10 % Silikat-Hohlkugeln, ca. 5 % Ethylenvinylacetat (EVA) und ca. 3 % Calciumoxid mit einer Schichtdicke von 1,5 bis 4,5 mm, vorzugsweise 2,5 bis 3,5 mm und insbesondere etwa 3 mm, und ein Flächengewicht von 2 bis 6 kg/m², vorzugsweise 3 bis 5 kg/m² und insbesondere etwa 3,98 kg/m², aufweist.

Alternativ oder zusätzlich kann für die zweite Schicht ein thermoplastischer Hartschaum wie beispielsweise Polystyrol oder Polyethylen verwendet werden.

Ferner können die Wärmeisolationseigenschaften verbessert werden, indem der zweiten Schicht Expansionsmittel, ggf. chemische Treibmittel, und/oder leichte Füllstoffe zugegeben werden, wodurch das spezifische Gewicht der zweiten Schicht reduziert und damit einhergehend auch die spezifische Wärmekapazität reduziert werden kann. Als Expansionsmittel können beispielsweise expandierende thermoplastische oder duroplastische Kunststoffkörper verwendet werden. Als leichte Füllstoffe sind beispielsweise Silikat-Hohlkugeln, gemahlene, offen- oder geschlossenzellige, thermoplastische oder vernetzte PE- oder PU-Hart- oder Weichschäume zu nennen.

Durch geeignete Wahl der vorgenannten Parameter und Materialien können die Schalldämpfungs- und/oder -dämmungseigenschaften sowie die Wärmedämmungseigenschaften optimiert und gewünschtenfalls an die jeweiligen technischen Erfordernisse, beispielsweise die gegebenen Platzverhältnisse, angepasst werden.

Die Erfindung betrifft insbesondere auch eine Geschirrspülmaschine mit mindestens einer erfindungsgemäß ausgebildeten Sandwichplatte. Wenn eine erfindungsgemäß ausgebildete Sandwichplatte insbesondere auf einer Außenwand oder mehreren Außenwänden des Spülbehälters der Geschirrspülmaschine aufgebracht wird, so kann die Geschirrspülmaschine sowohl hohe Anforderungen an ihre Schalldämmungs- und/oder Schalldämpfungseigenschaften als auch an ihr thermisches Isolierverhalten verbessert erfüllen als dies bisher bei herkömmlichen Geschirrspülmaschinen möglich war. Durch die erfindungsgemäße Sandwichplatte wird ein unzulässiger Wärmeenergieverlust aus dem Innenraum des Spülbehälters weitgehend vermieden, so dass die Energieeffizienz einer derartigen, erfindungsgemäß ausgebildeten Geschirrspülmaschine gegenüber herkömmlich schallgedämmten- und/oder schallgedämpften Geschirrspülmaschinen gesteigert werden kann.

Die der Erfindung zugrundeliegende Aufgabe wird auch mit einem Verfahren zur Herstellung einer schalldämpfenden Sandwichplatte, insbesondere einer Sandwichplatte gemäß vorstehender Ausgestaltung, gemäß Anspruch 11 gelöst.

Als zweite Schicht zur insbesondere thermischen Isolierung wird nach einer vorteilhaften Weiterbildung der Erfindung mit Vorteil ein thermoexpandierbarer Schaum verwendet. Auf diese zweite Schicht wird an ihrer zweiten Hauptseite (die der ersten Hauptseite gegenüber liegt, an der die zweite Schicht mit der ersten Schicht verbunden ist) vorzugsweise eine Heißschmelzkleberschicht aufgebracht und diese Heißschmelzkleberschicht wird so aufgeschmolzen, dass dabei gleichzeitig bzw. damit einhergehend der thermoexpandierbare Schaum zur Expansion gebracht wird und in seine endgültige Form (insbesondere endgültige Dicke) ggf mit der entsprechenden Perforierung - wozu die verschiedensten Ausgestaltungen in vorstehend beschriebener Weise zählen können - gelangt. Hierdurch wird ein sehr einfaches, kostengünstiges und vielseitig ausführbares Verfahren geschaffen, mit dem eine schalldämpfende Sandwichplatte mit den geforderten Eigenschaften hergestellt werden kann.

Die Aufbringung der einzelnen Schichten kann gemeinschaftlich, aber auch nacheinander - je nach Anwendungsfall - erfolgen.

Nach einer weiteren bevorzugten Ausführungsform der vorliegenden Erfindung, wird die zweite Schicht zusammen mit der Heißschmelzkleberschicht auf das Bauteil gelegt und erwärmt, wodurch sich die zweite Schicht durch ihre thermische Verformbarkeit den Oberflächenkonturen (z. B. Sickenverlauf) des zu dämmenden Bauteils anpasst. Unterstützt durch das Eigengewicht der Schicht wird die Oberflächenkontur vollständig abgedeckt und mittels der Heißschmelzkleberschicht wird die zweite Schicht fest mit dem Bauteil verbunden. Gleichzeitig expandiert die zweite Schicht und nimmt am Ende des Verfahrens seine endgültige Form an. Es hat sich gezeigt, dass sich die Verwendung von Bitumenschaum besonders gut für das vorliegende Verfahren eignet, da sich dieser durch sein Eigengewicht und seine thermische Formbarkeit gut dem Sickenverlauf, d. h. der Oberflächenstruktur des zu entdröhnenden Bauteils anpasst. Andere Schäume aus beispielsweise PE, PU, PP zeigen dieses Verhalten nicht bzw. in geringerem Maße und haben auch nicht - wie der Bitumenschaum - die besonders vorteilhaften Dämpfungseigenschaften. Erst im Anschluss wird die erste Schicht mittels einer weiteren Heißschmelzkleberschicht auf die expandierte zweite Schicht aufgeschmolzen oder mittels eines Haftklebers aufgebracht.

Nach einer weiteren vorteilhaften Ausführungsform der vorliegenden Erfindung wird die zweite Schicht zunächst mittels eines Haftklebers auf das Bauteil aufgebracht. Bei der Verwendung von Bitumenschaum ist dies aufgrund seiner geringen Rückstellkraft gut möglich. Anschließend wird die erste Schicht mit Heißschmelzkleber auf die zweite Schicht aufgebracht und erwärmt, so dass die erste Schicht auf der zweiten Schicht vollflächig aufgeschmolzen wird.

Nach einer weiteren Ausführungsform der vorliegenden Erfindung wird die erste mit der zweiten Schicht mittels eines Haftklebers verbunden und die zweite Schicht wird an der dem Bauteil zugewandten Seite mit einer Heißschmelzkleberschicht ausgestattet. Anschließend kann der Schichtenverbund auf dem Bauteil aufgebracht und mittels Erwärmung und der Heißschmelzkleberschicht fest mit dem Bauteil verbunden werden.

Weitere Vorteile, Merkmale und Besonderheiten der Erfindung ergeben sich aus der nachfolgenden ausführlichen Beschreibung verschiedener Ausführungsformen von erfindungsgemäßen Sandwichplatten. Es zeigen jeweils schematisch:
- Fig. 1: im Querschnitt eine erste Ausführungsform einer Sandwichplatte,
- Fig. 2: im Querschnitt eine zweite Ausführungsform einer zweiten Schicht einer Sandwichplatte,
- Fig. 3: in Draufsicht eine dritte vorteilhafte Ausführungsform einer zweiten Schicht einer erfindungsgemäßen Sandwichplatte,
- Fig.4: im Querschnitt eine vierte Ausführungsform einer Sandwichplatte,
- Fig. 5: ein Diagramm des akustischen Verlustfaktors der vierten Ausführungsform der Sandwichplatte,
- Fig. 6: im Querschnitt eine fünfte Ausführungsform einer Sandwichplatte und
- Fig. 7: ein Diagramm des akustischen Verlustfaktors der fünften vorteilhaften Ausführungsform der Sandwichplatte.

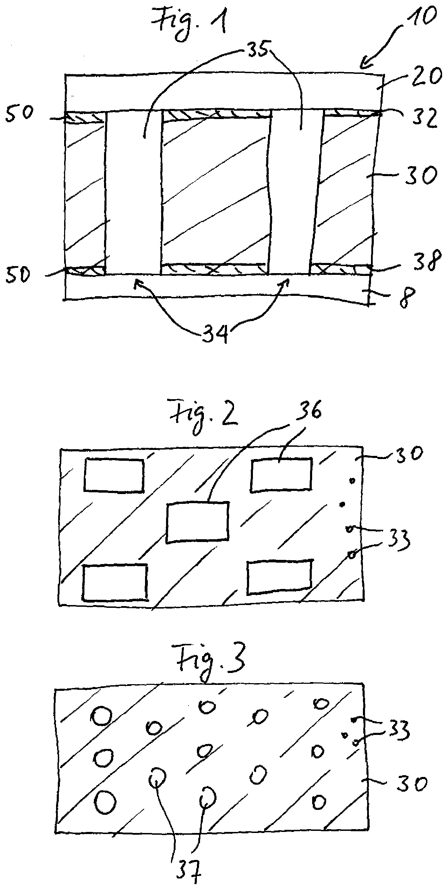

Fig. 1 zeigt schematisch im Querschnitt eine erste Ausführungsform einer schalldämpfenden bzw. schalldämmenden Sandwichplatte 10, die nachstehend der Einfachheit halber nur als Sandwichplatte bezeichnet wird. Die Sandwichplatte 10 ist zum Aufbringen auf ein hier nur schematisch dargestelltes Bauteil 8 bestimmt. Die Sandwichplatte 10 umfasst eine erste, hier oben dargestellte, Schicht 20, welche der Schalldämpfung und/oder Schalldämmung dient. An der ersten Schicht 20 ist eine zweite Schicht 30 mittels einer dazwischen liegenden Kleberschicht 50, die beispielsweise aus einem Haftkleber sein kann, befestigt. Stattdessen kann aber auch beispielsweise ein Heißschmelzkleber verwendet werden. Die Befestigung der zweiten Schicht 30 an der ersten Schicht 20 erfolgt dabei über die erste Hauptseite 32 der zweiten Schicht 30, also über die hier oben dargestellte Flächenseite. An der zweiten Hauptseite 38 der zweiten Schicht 30 (also hier unten dargestellt) ist die zweite Schicht 30 mit einer weiteren Kleberschicht 50, die ebenfalls beispielsweise ein Haftkleber oder ein Heißschmelzkleber sein kann, versehen. Mit Hilfe dieser Kleberschicht 50 wird die zweite Schicht 30 auf ein Bauteil 8 geklebt, welches akustisch zu verbessern ist bzw. bei dem eine Schalldämpfung und/oder Schalldämmung vorzunehmen ist. Erfindungsgemäß zeichnet sich diese Sandwichplatte 10 dadurch aus, dass die zweite Schicht 30 eine Perforation 34 aufweist, die bei dieser ersten Ausführungsform in Form einer Vielzahl von Durchgangslöchern 35 ausgebildet ist, welche die zweite Schicht 30 in ihrer Dickenerstreckung vollständig durchdringen. Diese Dickenerstreckung bezeichnet in anderen Worten die Richtung von dem Bauteil 8 zur ersten Schicht 20 oder umgekehrt, also quer zur flächigen Ausdehnung der zweiten Schicht 30.

Durch die Perforierung 34 wird die thermische Isolationsfähigkeit der zweiten Schicht 30 und damit der gesamten Sandwichplatte 10 verbessert.

Die erste Schicht 20 kann beispielsweise eine bituminöse Schicht aufweisen oder sogar ganz aus einer bituminösen Schicht wie beispielsweise Bitumen F26 bestehen. Die zweite Schicht 30 kann z.B. einen thermoplastischen Hartschaum wie beispielsweise Polystyrol oder Polyethylen oder einen Bitumen-Schaum aufweisen.

Die im Hinblick auf die erste Ausführungsform getroffenen Erläuterungen sowie die verwendeten Bezugszeichen gelten auch für die nachfolgenden Ausführungsformen, außer wenn dies ausdrücklich anders angegeben ist.

Die Fig. 2 zeigt schematisch im Querschnitt eine zweite Ausführungsform der Sandwichplatte 10, bei der die Perforierung in Form einer Vielzahl von Hohlräumen 36 ausgebildet ist, die hier im Ausführungsbeispiel jeweils einen quadratischen bzw. rechteckigen Querschnitt aufweisen. Die Hohlräume 36 sind somit im Allgemeinen quaderförmig, im speziellen Fall sogar kubisch. Die zweite Schicht 30 ist aus einem Schaum gebildet, der nur schematisch angedeutete Poren 33 aufweist. Es ist festzuhalten, dass die Hohlräume 36 größer, in der Regel sogar deutlich größer, als die Poren 33 sind.

Fig. 3 zeigt schematisch eine Draufsicht auf eine dritte Ausführungsform einer zweiten Schicht 30 einer erfindungsgemäßen Sandwichplatte 10. Die Perforierung ist hierbei als eine Vielzahl von Hohlräumen 37 mit in etwa kreisförmigem Querschnitt ausgebildet, die ebenfalls größer als die Poren 33 des die zweite Schicht 30 bildenden Schaums sind.

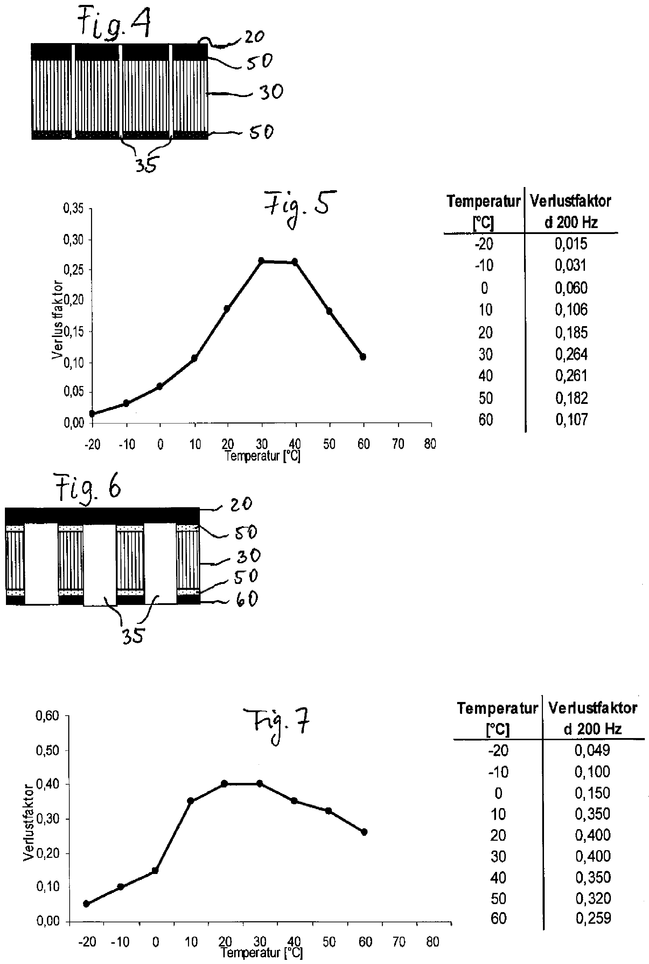

Fig. 4 zeigt schematisch im Querschnitt eine vierte Ausführungsform der Sandwichplatte 10. Die erste Schicht 20 ist mittels einer Kleberschicht 50 an der zweiten Schicht 30 befestigt, welche wiederum mit einer zweiten Kleberschicht 50 zur Befestigung an einem nicht dargestellten Bauteil versehen ist. Die zweite Schicht 30 ist aus Bitumen-Leichtfolie aus ca. 40 % Bitumen, ca. 20 % Calciumcarbonat, ca. 2,0 % Sepiolith, ca. 20 % Glimmer, ca. 10 % Silikat-Hohlkugeln, ca. 5 % Ethylenvinylacetat und ca. 3 % Calciumoxid mit einer Dicke von 3,0 mm und einem Flächengewicht von 3,98 k/m² gebildet und weist Durchgangslöcher 35 auf, welche die erste Schicht 30 über ihre ganze Dicke sowie auch die beiden Kleberschichten 50 in ihrer Dicke vollständig durchsetzen.
Der akustische Verlustfaktor d einer derartigen Sandwichplatte 10 ist in Fig. 5 in Abhängigkeit von der Temperatur für eine Frequenz von 200 Hz dargestellt. Das standardisierte ISO-Verfahren zur Charakterisierung der Materialeigenschaften von Antidröhnbelägen ist bekanntlich das Verfahren nach Oberst. Das Messverfahren besteht darin, einen streifenförmigen Probenkörper mit rechteckigem Querschnitt zu Biegeschwingungen anzuregen. Der Probekörper wird dazu vertikal hängend einseitig am oberen Ende fest eingespannt. Das untere freie Ende wird mittels eines Schwingerregers induktiv angeregt. Aus dem Resonanzverhalten des Probenkörpers werden Kenngrößen, die die Dämpfungseigenschaften beschreiben, z. B. der Verlustfaktor d, abgeleitet. Auf diese Weise erhält man Werte für die Resonanzfrequenzen, für alle anderen Frequenzen wird linear inter- bzw. extrapoliert.

Wie aus dem Diagramm und der Tabelle von Fig. 4 ersichtlich, nimmt dabei der Verlustfaktor d bei einer Temperatur von - 20°C vom Wert 0,015 bis zu einem Wert von 0,264 für eine Temperatur von 30°C zu, wonach er für eine Temperatur von 60°C auf einen Wert von 0,107 abfällt. Eine derartige Sandwichplatte kann in vorteilhafter Weise im Fahrzeugbau im Bodenbereich, im Rohbau und in der Lackiererei manuell, mittels Handhabungsvorrichtungen - also halbautomatisch - und mittels Roboterapplikation eingesetzt werden.

Fig. 6 zeigt schematisch im Querschnitt eine fünfte Ausführungsform der Sandwichplatte 10. Die erste Schicht 20 ist hier als Alu-Verbund mit einer Dicke von 0,05 bis 1,5 mm, bevorzugt 0,15 bis 0,5 mm, ausgebildet. Dieser Alu-Verbund ist vorzugsweise mit Noppen versehen und/oder mikroperforiert. Als zweite Schicht 30 ist eine Akustikfolie aus ca. 50 % Bitumen, ca. 10 % Sepiolith, ca. 5 % Silikat-Hohlkugeln, ca. 30 % Ethylenvinylacetat und ca. 5 % Calciumoxid vorgesehen, die mittels einer Haftkleberschicht 50 an der ersten Schicht 20 befestigt ist. Mittels einer weiteren Haftkleberschicht 50 ist die zweite Schicht 20 an ihrer anderen - hier unten dargestellten - Seite an einem Abdeckmaterial 60 angeklebt. Ein derartiges Abdeckmaterial 60 kann auch bei allen anderen Ausführungsformen vorhanden sein. Ähnlich wie bei der vierten Ausführungsform weist auch die zweite Schicht 30 gemäß dieser fünften Ausführungsform Durchgangslöcher 35 auf, welche die Perforierung bilden. Wie in der zeichnerischen Darstellung zu erkennen, macht hierbei die Perforierung etwa 50 % des Gesamtvolumens der zweiten Schicht 30 aus. Die zweite Schicht 30 besitzt eine Dicke von 7,5 mm und weist ein Flächengewicht von 4,52 kg/m² auf. Der akustische Verlustfaktor einer derartigen Sandwichplatte 10 ist in Fig. 7 in Abhängigkeit von der Temperatur für eine Frequenz von 200 Hz dargestellt. Wie aus dem Diagramm und der Tabelle ersichtlich, nimmt dabei der Verlustfaktor d bei einer Temperatur von - 20°C vom Wert 0,049 bis zu einem Wert von 0,400 für Temperaturen von 20 °C und 30 °C zu, wonach er für eine Temperatur von 60 °C auf einen Wert von 0,259 abfällt.

Es versteht sich von selbst, dass die Ausgestaltung der Perforierung nicht auf die vorstehend beschriebenen Beispiele beschränkt ist, sondern dass sie auch beliebige andere Formen und Arten der Anordnung aufweisen kann.

Eine vorstehend beschriebene Sandwichplatte 10 kann in vorteilhafter Weise im Fahrzeugbau im Bereich der Türen und des Daches sowie einer Stirnwand sowohl in der Lackiererei als auch in der Montage verwendet werden. Das Anbringen ist hierbei ebenfalls manuell, mittels Handhabungsvorrichtungen sowie mittels Roboterapplikation möglich.

Die beschriebenen Sandwichplatten können selbstverständlich auch in einer Vielzahl von anderen Anwendungen mit Vorteil eingesetzt werden, wozu unter anderem die Herstellung von Spülmaschinen zählt.

Allen vorstehend beschriebenen Ausführungsformen der erfindungsgemäßen Sandwichplatte 10 ist gemeinsam, dass sie sehr gute Wärmedämmungseigenschaften bei gleichzeitig sehr guten Schalldämpfungs- und/oder Schalldämmungseigenschaften aufweisen.
Die Perforierung, wie die Hohlräume 36, 37, können beispielsweise durch Stanzen oder Schneiden eingebracht werden.

Eine erfindungsgemäße Sandwichplatte 10, bei der die zweite Schicht 30 aus einem thermoexpandierbaren Material gebildet ist, kann in vorteilhafter Weise dadurch hergestellt werden, dass jeweils Heißschmelzkleber zwischen die erste Schicht 20 und die zweite Schicht 30 sowie zwischen die zweite Schicht 30 und das zu beaufschlagende Bauteil 8 aufgebracht wird und die Heißschmelzkleberschichten dann so durch Erhitzen aufgeschmolzen werden, dass als Folge auch der thermoexpandierbare Schaum zur Expansion veranlasst wird und dabei auch die Perforierung in Form von Hohlräumen 36, 37 ausbildet. Die zweite Schicht 30 kann aber auch vor oder nach dem Expandieren durch Lochung perforiert werden.

Für die Herstellung der erfindungsgemäßen Sandwichplatte 10 sowie eines damit ausgerüsteten Bauteils 8 ergeben sich folgende vorteilhafte Optionen:
Nach einer ersten vorteilhaften Ausführungsform der vorliegenden Erfindung werden die beiden Schichten 20 und 30 separat hergestellt und anschließend appliziert. Zu diesem Zweck wird eine Heißschmelzkleberschicht 50 auf beiden Hauptseiten 32, 38 der zweiten Schicht aufgebracht. Für die zweite Schicht 30 wird ein thermoexpandierbarer Schaum, insbesondere auf Bitumenbasis, genutzt. Die zweite Schicht 30 wird auf dem Bauteil 8 aufgelegt und erwärmt. Dadurch schmiegt sich die zweite Schicht (30) - unterstützt durch ihr Eigengewicht - gut an die Oberfläche des Bauteils (8) an. Gegebenenfalls kann vor dem Erwärmen bereits die erste Schicht 20 (ggf. wird dort eine Heißschmelzkleberschicht 50 zur Verbindung mit der zweiten Schicht 30 aufgebracht) auf die zweite Schicht 30 aufgelegt werden, so dass beim Erwärmen beide Schichten 20, 30 mittels der entsprechenden Heißschmelzkleberschicht 50 miteinander verbunden werden.

Durch das Erwärmen der zweiten Schicht 30 bzw. - sofern die erste Schicht 20 bereits aufgelegt wurde - beider Schichten, erfolgt ein Aufschmelzen der Heißschmelzkleberschichten 50 unter gleichzeitigem Expandieren des thermoexpandierbaren Schaums, wodurch sich die Perforation in Form von Hohlräumen 36, 37 gleichzeitig ausbildet. Die Erwärmung erfolgt insbesondere bei etwa 80°C bis etwa 190°C, bevorzugt zwischen etwa 100°C und 140°C. Bereits vor dem Erwärmen kann die zweite Schicht 30 auch gelocht werden, falls dies - zusätzlich zu den oder statt der Hohlräume - gewünscht wird.

Nach einer weiteren vorteilhaften Ausführungsform der vorliegenden Erfindung wird ein Haftkleber auf die zweite Hauptseite 38 der zweiten Schicht 30 und eine Heißschmelzkleberschicht 50 auf die erste Hauptseite 32 der zweiten Schicht und/oder auf die Seite der ersten Schicht aufgebracht, die der zweiten Schicht zugewandt ist. Anschließend wird die zweite Schicht 30 auf dem Bauteil 8 aufgelegt und angedrückt. Durch die geringen Rückstellkräfte des Bitumenschaums lässt sich dieser an den Oberflächenverlauf des Bauteils 8 gut anpassen. Die erste Schicht 20 wird auf die zweite Schicht 30 gelegt bzw. werden die einzelnen Schichten angedrückt bzw. auf dem Bauteil 8 festgelegt. Anschließend erfolgt die Erwärmung der ersten Schicht 20, wodurch die Heißschmelzkleberschicht 50 aufgeschmolzen und der thermoexpandierbare Schaum, ggf. unter Ausbildung der Hohlräume, expandiert wird.

Nach einer weiteren vorteilhaften Ausführungsform der vorliegenden Erfindung wird der Schichtenverbund separat hergestellt und erst dann auf dem Bauteil 8 aufgebracht. Hierzu wird ein Haftkleber auf die erste Hauptseite 32 der zweiten Schicht aufgebracht und eine Heißschmelzkleberschicht 50 auf der zweiten Hauptseite 38 der zweiten Schicht 30. Die erste und die zweite Schicht 20, 30 werden mittels des Haftklebers zusammengefügt und anschließend - gegebenenfalls an einem anderen Ort, an dem das Bauteil 8 zu entdröhnen ist - auf dem Bauteil 8 aufgelegt. Mittels einer Erwärmung des Schichtenverbunds erfolgt ein Aufschmelzen der Heißschmelzkleberschicht 50 und eine feste Verbindung des Schichtenverbunds mit dem Bauteil 8. Gleichzeitig expandiert der thermoexpandierbare Schaum, ggf. unter Ausbildung der Hohlräume.

Nach einer weiteren vorteilhaften Ausführungsform der Erfindung können auch beide Hauptseiten 32, 38 der zweiten Schicht 30 mit Haftkleber ausgestattet sein und die zweite Schicht 30 kann aus einem bereits perforierten Schaum, wie beispielsweise einem Bitumenschaum oder einem Schaum aus PE, PU oder PP bestehen, der dann zusammen mit der ersten Schicht 20 auf dem Bauteil 8 durch Andrücken aufgebracht wird. Die insbesondere als Lochung ausgelegte Perforation erfolgt vorab durch herkömmliche Werkzeuge, wie beispielsweise Stanzwerkzeuge. Eine solche Ausführungsform eignet sich insbesondere für plane Flächen von Bauteilen 8, da hier der Sickenverlauf bzw. unregelmäßige Oberflächenkonturen durch die Schichten 20, 30 nicht nachgebildet werden müssen. Der Vorteil einer solchen Sandwichplatte sind die geringen Rückstellkräfte, insbesondere bei Verwendung eines Bitumenschaums, wodurch sich die Schichten 20, 30 auch gebogenen oder gekrümmten Oberflächen anfügen können.

Die vorbeschriebenen Schritte zur Herstellung der erfindungsgemäßen Sandwichplatte lassen sich - je nach Anwendungszweck - auch umkehren bzw. austauschen. So ist es beispielsweise auch möglich, die erste Schicht 20 auf die zweite Schicht 30 mittels einer Heißschmelzkleberschicht vorab aufzubringen, um erst dann beide Schichten mittels einer weiteren Heißschmelzkleberschicht auf dem Bauteil durch Erwärmen aufzubringen. Durch gezielte Nutzung der Erwärmungstemperaturen kann dann eine Expansion der zweiten Schicht erst beim Aufbringen auf dem Bauteil 8 erfolgen.

Als thermoexpandierbarer Schaum eignet sich beispielsweise ein Bitumen-Kunststoffschaum oder ein Kunststoffschaum. Beispiele hierfür sind:
1. Bitumen ca. 85 %, expandierende Hohlkörper ca. 5 %, Thermoplaste ca. 10 %;
2. Bitumen ca. 85 %, gemahlene Schäume ca. 5 %, Thermoplaste ca. 10 %;
3. Polystyrol ca. 85 %, expandierende Hohlkörper ca. 5 %, Weichmacher ca. 10 %;
4. Polyvinylacetat ca. 85 %, expandierende Hohlkörper ca. 5 %, Weichmacher ca. 10 %;
5. Polyethylen ca. 70 %, expandierende Hohlkörper ca. 5 %, Harz ca. 25 %.

Es ist festzuhalten, dass die unter Bezug auf einzelne Ausführungsformen beschriebenen Merkmale der Erfindung, wie beispielsweise die Ausgestaltung und Anordnung der Perforation, die Schichtdicken und Flächengewichte sowie die verwendeten Materialien, auch bei anderen Ausführungsformen einzeln oder kumulativ vorhanden sein können, außer wenn es anders angegeben ist oder sich aus technischen Gründen von selbst verbietet.

### Bezugszeichentiste

- 8: Bauteil
- 10: Sandwichplatte
- 20: erste Schicht
- 24: Aluminium-Verbund
- 30: zweite Schicht
- 32: erste Hauptseite
- 33: Poren
- 34: Perforierung
- 35: Durchgangsloch
- 36: Hohlraum
- 37: Hohlraum
- 38: zweite Hauptseite
- 39: Akustikfolie
- 40: Bitumen-Leichtfolie
- 50: Kleberschicht
- 60: Abdeckmaterial

## Patentansprüche

1. Schalldämpfende und/oder -dämmende Sandwichplatte (10), aufweisend
- eine erste Schicht (20) zur Schalldämpfung und/oder Schalldämmung und
- eine zweite Schicht (30) zur thermischen Isolierung, die an ihrer ersten Hauptseite (32) mit der ersten Schicht (20) fest verbunden ist und mit ihrer zweiten Hauptseite (38) zur Verbindung mit einem akustisch zu verbessernden Bauteil (8) bestimmt ist,
**dadurch gekennzeichnet,**
**dass** die zweite Schicht (30) eine Perforierung (34) aufweist, und
**dass** die zweite Schicht (30) geschäumtes Material mit Poren (33) aufweist und die Perforierung geschlossene Hohlräume (36, 37) umfasst, die größer als die Poren (33) sind.

2. Sandwichplatte (10) nach Anspruch 1,
**dadurch gekennzeichnet, dass** die Perforierung Durchgangslöcher (35) umfasst, die die zweite Schicht (30) in einer Erstreckungsrichtung von der ersten Schicht (20) zum Bauteil (8) vollständig durchsetzen.

3. Sandwichplatte (10) nach einem der vorhergehenden Ansprüche,
**dadurch gekennzeichnet, dass** die Perforierung (34) 20 bis 60 %, vorzugsweise 30 bis 50 % und insbesondere etwa 40 %, des Gesamtvolumens der zweiten Schicht (30) ausmacht.

4. Sandwichplatte (10) nach einem der vorhergehenden Ansprüche,
**dadurch gekennzeichnet, dass** die erste Schicht (20) eine Bitumenzusammensetzung aus ca. 15 % Bitumen, ca. 0,5 % Ethylenvinylacetat, ca. 1,0 % Low-Density-Polyethylen, ca. 0,5 % Sepiolith, ca. 41 % Calciumcarbonat, ca. 2,0 % Calciumoxid und ca. 40 % Eisenoxid, eine Schichtdicke von 0,5 bis 2 mm, vorzugsweise 0,7 bis 1,2 mm und insbesondere etwa 0,9 mm, und ein Flächengewicht von 1 bis 3 kg/m², vorzugsweise 1,5 bis 2,5 kg/m² und insbesondere etwa 2 kg/m², aufweist, oder dass die erste Schicht (20) mit dieser Bitumenzusammensetzung eine Schichtdicke von 1,0 bis 3,0 mm, vorzugsweise 1,5 bis 2,5 mm und insbesondere etwa 2 mm, und ein Flächengewicht von 2 bis 5 kg/m², vorzugsweise 3 bis 4 kg/m² und insbesondere etwa 3,6 kg/m², aufweist.

5. Sandwichplatte (10) nach einem der vorhergehenden Ansprüche,
**dadurch gekennzeichnet, dass** die erste Schicht (20) Aluminium von 0,05 bis 1,5 mm, vorzugsweise 0,15 bis 0,5 mm und insbesondere etwa 0,2 mm, Dicke und/oder eine thermoplastische oder duroplastische Versteifungsschicht von 0,05 bis 1,0 mm, vorzugsweise 0,1 bis 0,8 mm und insbesondere etwa 0,3 mm, Dicke aufweist.

6. Sandwichplatte (10) nach einem der vorhergehenden Ansprüche,
**dadurch gekennzeichnet, dass** die zweite Schicht (30) ca. 50 % Bitumen, ca. 35 % Silikat-Hohlkugeln, ca. 5,0 % Zellulosefaser, ca. 5,0 % Calciumoxid und ca. 5,0 % Ethylenvinylacetat, eine Schichtdicke von 2 bis 6 mm, vorzugsweise 3 bis 5 mm und insbesondere etwa 4,2 mm, und ein Flächengewicht von 2 bis 5 kg/m², vorzugsweise 3 bis 4 kg/m² und insbesondere etwa 3,5 kg/m², aufweist, oder dass die zweite Schicht (30) Polystyrol und/oder Polyvinylacetat und/oder PE und/oder PP und/oder Ethylenvinylacetat, insbesondere aus ca. 40 % Polystyrol, ca. 30 % Silikat-Hohlkugeln, ca. 10 % Zellulosefasern, ca. 19 % Weichmacher und ca. 1,0 % Stabilisator, eine Schichtdicke von 2 bis 7 mm, vorzugsweise 3 bis 6 mm und insbesondere etwa 4,5 mm, und ein Flächengewicht von 1 bis 3 kg/m², vorzugsweise 1,5 bis 2,5 kg/m² und insbesondere etwa 1,9 kg/m², aufweist.

7. Sandwichplatte (10) nach einem der vorhergehenden Ansprüche,
**dadurch gekennzeichnet, dass** die zweite Schicht (30) eine Akustikfolie aus ca. 50 % Bitumen, ca. 10 % Sepiolith, ca. 5 % Silikat-Hohlkugeln, ca. 30 % Ethylenvinylacetat und ca. 5 % Calciumoxid mit einer Schichtdicke von 3 bis 12 mm, vorzugsweise 6 bis 9 mm und insbesondere etwa 7,5 mm, und einem Flächengewicht von 3 bis 6 kg/m², vorzugsweise 4 bis 5 kg/m² und insbesondere etwa 4,52 kg/m², aufweist, und/oder eine Bitumen-Leichtfolie aus ca. 40 % Bitumen, ca. 20 % Calciumcarbonat, ca. 2,0 % Sepiolith, ca. 20 % Glimmer, ca. 10 % Silikat-Hohlkugeln, ca. 5 % Ethylenvinylacetat und ca. 3 % Calciumoxid mit eine Schichtdicke von 1,5 bis 4,5 mm, vorzugsweise 2,5 bis 3,5 mm und insbesondere etwa 3 mm, und einem Flächengewicht von 2 bis 6 kg/m², vorzugsweise 3 bis 5 kg/m² und insbesondere etwa 3,98 kg/m², aufweist.

8. Sandwichplatte (10) nach einem der vorhergehenden Ansprüche,
**dadurch gekennzeichnet, dass** die zweite Schicht (30) Expansionsmittel und/oder Füllstoffe zur Reduzierung des spezifischen Gewichts und der spezifischen Wärmekapazität der zweiten Schicht (30) enthält.

9. Schalldämpfungs- und/oder Schalldämmungsschicht zur Verwendung als erste Schicht (20) einer Sandwichplatte (10) nach einem der Ansprüche 1 bis 8.

10. Thermoisolierschicht zur Verwendung als zweite Schicht (30) einer Sandwichplatte (10) nach einem der Ansprüche 1 bis 8.

11. Geschirrspülmaschine mit mindestens einer Sandwichplatte nach mindestens einem der Ansprüche 1 bis 8.

12. Verfahren zur Herstellung einer schalldämpfenden und/oder -dämmenden Sandwichplatte (10) mit einer ersten Schicht (20) zur Schalldämpfung und/oder Schalldämmung und einer zweiten Schicht (30) zur thermischen Isolierung, die an ihrer ersten Hauptseite (32) mit der ersten Schicht (20) fest verbunden ist und mit ihrer zweiten Hauptseite (38) zur Verbindung mit einem akustisch zu verbessernden Bauteil (8) bestimmt ist, insbesondere zur Herstellung einer schalldämpfenden Sandwichplatte (10) gemäß einem der vorhergehenden Ansprüche, **dadurch gekennzeichnet,**
**dass** die zweite Schicht (30) perforiert wird.

13. Verfahren nach Anspruch 12, umfassend folgende Schritte:
- Mischen und Erwärmen eines oder mehrerer thermoexpandierbarer Materialien, wie Bitumen, auf 120°C - 190°C, zur Herstellung der zweiten Schicht (30) und
- Perforieren der zweiten Schicht (30) durch Lochung und/oder durch Ausformung von Hohlräumen (36, 37) durch die Erwärmung.

14. Verfahren nach Anspruch 12 oder 13, umfassend folgende Schritte:
- Verwendung eines thermoexpandierbaren Schaums für die zweite Schicht (30),
- Einbringung einer Perforation in die zweite Schicht (30) durch Lochung,
- Aufbringen einer Heißschmelzkleberschicht (50) oder eines Haftklebers auf die zweite Hauptseite (38) und/oder die erste Hauptseite (32) der zweiten Schicht (30) und
- Erwärmen mindestens einer der Schichten (20, 30) und Expandieren des thermoexpandierbaren Schaums, ggf. unter Ausbildung von Hohlräumen (36, 37).

15. Verfahren nach einem der Ansprüche 12 - 14, umfassend folgende Schritte:
- Aufbringen einer Heißschmelzkleberschicht (50) auf beiden Hauptseiten (32, 38) der perforierten zweiten Schicht (30),
- Auflegen der zweiten Schicht (30) auf dem akustisch zu verbessernden Bauteil (8) und der ersten Schicht (20) auf die zweite Schicht (30), vorzugsweise durch Andrücken, und
- Erwärmen der ersten und/oder der zweiten Schicht (20, 30), insbesondere auf ca. 80°C bis 190°C, dadurch Aufschmelzen der Heißschmelzkleberschichten (50), Aufschmelzen der zweiten Schicht (30) auf dem Bauteil (8) und Aufschmelzen der ersten Schicht (20) auf die zweite Schicht (30).

16. Verfahren nach einem der Ansprüche 12 - 14, umfassend folgende Schritte:
- Aufbringen eines Haftklebers auf die zweite Hauptseite (38) der perforierten zweiten Schicht (30) und Aufbringen einer Heißschmelzkleberschicht (50) auf der ersten Hauptseite (32) der zweiten Schicht (30) oder auf der ersten Schicht (20),
- Auflegen der zweiten Schicht (30) auf dem Bauteil (8) und der ersten Schicht (20) auf die zweite Schicht (30),
- Andrücken der zweiten Schicht (30) auf dem Bauteil (8), und
- Erwärmen der ersten Schicht (20), insbesondere auf ca. 80°C bis 190°C, dadurch Aufschmelzen der Heißschmelzkleberschicht (50) und der ersten Schicht (20) auf die zweite Schicht (30).

17. Verfahren nach einem der Ansprüche 12 - 14, umfassend folgende Schritte:
- Aufbringen einer Heißschmelzkleberschicht (50) auf die zweite Hauptseite (38) der perforierten zweiten Schicht (30) und Aufbringen eines Haftklebers auf die erste Hauptseite (32) der zweiten Schicht (30) oder auf die erste Schicht (20),
- Andrücken der ersten Schicht (20) auf die zweite Schicht (30),
- Erwärmen der zweiten Schicht (20), insbesondere auf ca. 80°C bis 190°C, dadurch Aufschmelzen der Heißschmelzkleberschicht (50) und beider Schichten auf dem Bauteil (8).

18. Verfahren nach einem der Ansprüche 12 oder 13, umfassend folgende Schritte:
- Aufbringen eines Haftklebers auf die erste Hauptseite (32) der perforierten zweiten Schicht (30) und Aufbringen einer Heißschmelzkleberschicht (50) auf der zweiten Hauptseite (38) der zweiten Schicht (30),
- Zusammenfügen der ersten und der zweiten Schicht (20, 30) mittels des Haftklebers und Auflegen des Schichtenverbunds auf dem Bauteil (8), und
- Erwärmen des Schichtenverbunds (20, 30), insbesondere auf ca. 80°C bis 190°C, dadurch Aufschmelzen der Heißschmelzkleberschicht (50) und beider Schichten auf dem Bauteil (8).

## Claims

1. A sound-damping and/or -insulating sandwich plate (10), comprising
- a first layer (20) for sound damping and/or sound insulation, and
- a second layer (30) for thermal insulation, which, on the first main side (32) thereof, is securely connected to the first layer (20) and is intended, using the second main side (38) thereof, for connection to a component (8), which is to be improved acoustically,
**characterized in that**,
the second layer (30) has a perforation (34), and
**in that** the second layer (30) has foamed material with pores (33) and the perforation comprises closed cavities (36, 37), which are larger than the pores (33).

2. The sandwich plate (10) according to Claim 1,
**characterized in that** the perforation comprises through holes (35), which completely penetrate the second layer (30) in a direction of extent from the first layer (20) to the component (8).

3. The sandwich plate (10) according to one of the preceding claims, **characterized in that** the perforation (34) makes up 20 to 60%, preferably 30 to 50% and in particular approximately 40% of the total volume of the second layer (30).

4. The sandwich plate (10) according to one of the preceding claims,
**characterized in that** the first layer (20) comprises a bitumen composition made up of approx. 15% bitumen, approx. 0.5% ethylene-vinyl acetate, approx. 1.0% low-density polyethylene, approx. 0.5% sepiolite, approx. 41% calcium carbonate, approx. 2.0% calcium oxide and approx. 40% iron oxide, a layer thickness of 0.5 to 2 mm, preferably 0.7 to 1.2 mm and in particular approximately 0.9 mm, and a weight per unit area of 1 to 3 kg/m², preferably 1.5 to 2.5 kg/m² and in particular approximately 2 kg/m², or **in that** the first layer (20) with this bitumen composition has a layer thickness of 1.0 to 3.0 mm, preferably 1.5 to 2.5 mm and in particular approximately 2 mm, and a weight per unit area of 2 to 5 kg/m², preferably 3 to 4 kg/m² and in particular approximately 3.6 kg/m².

5. The sandwich plate (10) according to one of the preceding claims,
**characterized in that** the first layer (20) comprises aluminium with a thickness of 0.05 to 1.5 mm, preferably 0.15 to 0.5 mm and in particular approximately 0.2 mm, and/or a thermoplastic or thermosetting stiffening layer with a thickness of 0.05 to 1.0 mm, preferably 0.1 to 0.8 mm and in particular approximately 0.3 mm.

6. The sandwich plate (10) according to one of the preceding claims,
**characterized in that** the second layer (30) comprises approx. 50% bitumen, approx. 35% silicate hollow spheres, approx. 5.0% cellulose fibres, approx. 5.0% calcium oxide and approx. 5.0% ethylene-vinyl acetate, a layer thickness of 2 to 6 mm, preferably 3 to 5 mm and in particular approximately 4.2 mm and a weight per unit area of 2 to 5 kg/m², preferably 3 to 4 kg/m² and in particular approximately 3.5 kg/m², or **in that** the second layer (30) has polystyrene and/or polyvinyl acetate and/or PE and/or PP and/or ethylene-vinyl acetate, particularly made up of approx. 40% polystyrene, approx. 30% silicate hollow spheres, approx. 10% cellulose fibres, approx. 19% plasticizers and approx. 1.0% stabilizer, a layer thickness of 2 to 7 mm, preferably 3 to 6 mm and in particular approximately 4.5 mm, and a weight per unit area of 1 to 3 kg/m², preferably 1.5 to 2.5 kg/m² and in particular approximately 1.9 kg/m².

7. The sandwich plate (10) according to one of the preceding claims,
**characterized in that** the second layer (30) comprises an acoustic film made up of approx. 50% bitumen, approx. 10% sepiolite, approx. 5% silicate hollow spheres, approx. 30% ethylene-vinyl acetate and approx. 5% calcium oxide with a layer thickness of 3 to 12 mm, preferably 6 to 9 mm and in particular approximately 7.5 mm, and a weight per unit area of 3 to 6 kg/m², preferably 4 to 5 kg/m² and in particular approximately 4.52 kg/m², or has a bitumen lightweight film made up of approx. 40% bitumen, approx. 20% calcium carbonate, approx. 2.0% sepiolite, approx. 20% mica, approx. 10% silicate hollow spheres, approx. 5% ethylene-vinyl acetate and approx. 3% calcium oxide with a layer thickness of 1.5 to 4.5 mm, preferably 2.5 to 3.5 mm and in particular approximately 3 mm, and a weight per unit area of 2 to 6 kg/m², preferably 3 to 5 kg/m² and in particular approximately 3.98 kg/m².

8. The sandwich plate (10) according to one of the preceding claims,
**characterized in that** the second layer (30) contains expansion agents and/or fillers for reducing the specific weight and the specific heat capacity of the second layer (30).

9. A sound-damping and/or sound-insulating layer for use as first layer (20) of a sandwich plate (10) according to one of Claims 1 to 8.

10. A thermal insulation layer for use as a second layer (30) of a sandwich plate (10) according to one of Claims 1 to 8.

11. A dishwasher having at least one sandwich plate according to at least one of Claims 1 to 8.

12. A method for producing a sound-damping and/or -insulating sandwich plate (10) having a first layer (20) for sound damping and/or sound insulation and a second layer (30) for thermal insulation, which on the first main side (32) thereof is securely connected to the first layer (20) and is intended, using the second main side (38) thereof, for connection to a component (8), which is to be improved acoustically, particularly for producing a sound-damping sandwich plate (10) according to one of the preceding claims, **characterized in that** the second layer (30) is perforated.

13. The method according to Claim 12, comprising the following steps:
- mixing and heating one or more thermally expandable materials, such as bitumen, to 120°C-190°C, to produce the second layer (30), and
- perforating the second layer (30) by punching and/or by forming cavities (36, 37) by means of the heating.

14. The method according to Claim 12 or 13, comprising the following steps:
- using a thermally expandable foam for the second layer (30),
- introducing a perforation into the second layer (30) by means of punching,
- applying a hot-melt adhesive layer (50) or a contact adhesive onto the second main side (38) and/or the first main side (32) of the second layer (30), and
- heating at least one of the layers (20, 30) and expanding the thermally expandable foam, if appropriate with the formation of cavities (36, 37).

15. The method according to one of Claims 12-14, comprising the following steps:
- applying a hot-melt adhesive layer (50) on both main sides (32, 38) of the perforated second layer (30),
- placing the second layer (30) on the component (8), which is to be improved acoustically, and the first layer (20) onto the second layer (30), preferably by pressing on, and
- heating the first and/or the second layer (20, 30), particularly to approx. 80°C to 190°C and as a result melting of the hot-melt adhesive layers (50), melting of the second layer (30) on the component (8) and melting of the first layer (20) onto the second layer (30).

16. The method according to one of Claims 12-14, comprising the following steps:
- applying a contact adhesive onto the second main side (38) of the perforated second layer (30) and applying a hot-melt adhesive layer (50) on the first main side (32) of the second layer (30) or on the first layer (20),
- placing the second layer (30) on the component (8) and the first layer (20) onto the second layer (30),
- pressing the second layer (30) on the component (8), and
- heating the first layer (20), particularly to approx. 80°C to 190°C and as a result melting of the hot-melt adhesive layer (50) and the first layer (20) onto the second layer (30).

17. The method according to one of Claims 12-14, comprising the following steps:
- applying a hot-melt adhesive layer (50) onto the second main side (38) of the perforated second layer (30) and applying a contact adhesive onto the first main side (32) of the second layer (30) or onto the first layer (20),
- pressing the first layer (20) onto the second layer (30),
- heating the second layer (20), particularly to approx. 80°C to 190°C and as a result melting of the hot-melt adhesive layer (50) and the two layers on the component (8).

18. The method according to one of Claims 12 or 13, comprising the following steps:
- applying a contact adhesive onto the first main side (32) of the perforated second layer (30) and applying a hot-melt adhesive layer (50) on the second main side (38) of the second layer (30),
- joining the first and the second layer (20, 30) together by means of the contact adhesive and placing the layer composite on the component (8), and
- heating the layer composite (20, 30), particularly to approx. 80°C to 190°C and as a result melting of the hot-melt adhesive layer (50) and both layers on the component (8).

## Revendications

1. Panneau sandwich d'isolation phonique et/ou insonorisant (10), comportant
- une première couche (20) pour l'isolation phonique et/ou l'insonorisation et
- une deuxième couche (30) pour l'isolation thermique, qui est reliée fixement sur sa première face principale (32) à la première couche (20)et est destinée avec sa deuxième face principale (38) à être reliée avec un composant (8) devant être améliorer du point de vue acoustique,
**caractérisé en ce que**
la deuxième couche (30) comporte une perforation (34) et
la deuxième couche (30) comporte un matériau de mousse avec des pores (33)
et la perforation comprend des espaces creux fermés (36,37), qui sont plus grands que les pores (33).

2. Panneau sandwich (10) selon la revendication 1, **caractérisé en ce que** la perforation comprend des trous de passage (35) qui traversent complètement la deuxième couche (30) dans une direction d'extension de la première couche (20) vers le composant (8).

3. Panneau sandwich (10) selon l'une quelconque des revendications précédentes, **caractérisé en ce que** la perforation (34) représente 20 à 60%, de préférence 30 à 50% et en particulier environ 40% du volume total de la deuxième couche (30).

4. Panneau sandwich (10) selon l'une quelconque des revendications précédentes, **caractérisé en ce que** la première couche (20) comporte un composé bitumineux d'environ 15% de bitume, env. 0,5% d'éthylène-acétate de vinyle, env. 1,0% de polyéthylène basse densité, env. 0,5% de sépiolite, env. 41% de carbonate de calcium, env. 2,0% d'oxyde de calcium et env. 40% d'oxyde de fer, une épaisseur de couche de 0,5 à 2 mm, de préférence 0,7 à 1,2 mm et en particulier environ 0,9 mm et un grammage de 1 à 3 kg/m², de préférence 1,5 à 2,5 kg/m² et en particulier environ 2 kg/m² ou **en ce que** la première couche (20) avec ce composé bitumineux comporte une épaisseur de couche de 1,0 à 3,0 mm, de préférence 1,5 à 2,5 mm et en particulier environ 2 mm et un grammage de 2 à 5 kg/m², de préférence 3 à 4 kg/m² et en particulier environ 3,6 kg/m².

5. Panneau sandwich (10) selon l'une quelconque des revendications précédentes, **caractérisé en ce que** la première couche (20) comporte de l'aluminium d'une épaisseur de 0,05 à 1,5 mm, de préférence 0,15 à 0,5 mm et en particulier environ 0,2 mm, et/ou une couche de rigidification thermoplastique ou duroplastique d'une épaisseur de 0,05 à 1,0 mm, de préférence 0,1 à 0,8 mm et en particulier environ 0,3 mm.

6. Panneau sandwich (10) selon l'une quelconque des revendications précédentes, **caractérisé en ce que** la deuxième couche (30) comporte d'environ 50% de bitume, env. 35% de billes creuses de silicate, env. 5,0% de fibre de cellulose, env. 5,0% d'oxyde de calcium et env. 5,0% d'éthylène-acétate de vinyle, une épaisseur de couche de 2 à 6 mm, de préférence 3 à 5 mm et en particulier d'environ 4,2 mm et un grammage de 2 à 5 kg/m², de préférence 3 à 4 kg/m² et en particulier d'environ 3,5 kg/m² ou **en ce que** la deuxième couche (30) comporte du polystyrol et/ou de l'acétate de polyvinyle et/ou du polyéthylène (PE) et/ou polypropylène (PP) et/ou de l'éthylène-acétate de vinyle, en particulier d'env. 40% de polystyrol, env. 30% de billes creuses de silicate, env. 10% de fibres de cellulose, env. 19% de plastifiant et env. 1,0% de stabilisateur, une épaisseur de couche de 2 à 7 mm, de préférence 3 à 6 mm et en particulier environ 4,5 mm et un grammage de 1 à 3 kg/m², de préférence 1,5 à 2,5 kg/m² et en particulier environ 1,9 kg/m².

7. Panneau sandwich (10) selon l'une quelconque des revendications précédentes, **caractérisé en ce que** la deuxième couche (30) comporte une feuille acoustique d'env. 50% de bitume, env. 10% de sépiolite, env. 5% de billes creuses de silicate, env. 30% d'éthylène-acétate de vinyle et d'environ 5% d'oxyde de calcium avec une épaisseur de couche de 3 à 12 mm, de préférence 6 à 9 mm et en particulier d'environ 7,5 mm et un grammage de 3 à 6 kg/m², de préférence 4 à 5 kg/m² et en particulier d'environ 4,52 kg/m² et/ou une feuille légère de bitume d'env. 40% de bitume, env. 20% de carbonate de calcium, env. 2,0% de sépiolite, env. 10% de billes creuses de silicate, env. 5% d'éthylène-acétate de vinyle et env. 3% d'oxyde de calcium avec une épaisseur de couche de 1,5 à 4,5 mm, de préférence 2,5 à 3,5 mm et en particulier d'environ 3 mm et un grammage de 2 à 6 kg/m², de préférence 3 à 5 kg/m² et en particulier d'environ 3,98 kg/m².

8. Panneau sandwich (10) selon l'une quelconque des revendications précédentes, **caractérisé en ce que** la deuxième couche (30) contient un moyen d'expansion et/ou des charges pour réduire le poids spécifique et la capacité thermique spécifique de la deuxième couche (30).

9. Couche d'isolation phonique et/ou d'insonorisation pour utilisation en tant que première couche (20) d'un panneau sandwich (10), selon l'une quelconque des revendications 1 à 8.

10. Couche thermo-isolante pour utilisation en tant que deuxième couche (30) d'un panneau sandwich (10) selon l'une quelconque des revendication 1 à 8.

11. Lave-vaisselle avec au moins un panneau sandwich selon au moins l'une quelconque des revendications 1 à 8.

12. Procédé destiné à la fabrication d'un panneau sandwich d'isolation phonique et/ou insonorisant (10) comportant une première couche (20) pour l'isolation phonique et/ou l'insonorisation et une deuxième couche (30) pour l'isolation thermique, qui est reliée fixement par sa première face principale (32) à la première couche (20) et est destinée avec sa deuxième face principale (38) à être reliée à un composant (8) destiné à être amélioré du point de vue acoustique, en particulier pour la fabrication d'un panneau sandwich d'isolation phonique (10) selon l'une quelconque des revendications précédentes, **caractérisé en ce que** la deuxième couche (30) est perforée.

13. Procédé selon la revendication 12, comprenant les étapes suivantes :
- mélange et chauffage d'un ou plusieurs matériaux thermo-expansibles, comme le bitume, à 120° C - 190° C, pour la fabrication de la deuxième couche (30) et
- perforation de la deuxième couche (30) par perforation et/ou par moulage d'espaces creux (36,37) par le chauffage.

14. Procédé selon la revendication 12 ou 13, comprenant les étapes suivantes :
- utilisation d'une mousse thermo-expansible pour la deuxième couche (30),
- aménagement d'une perforation dans la deuxième couche (30) par poinçonnage,
- application d'une couche de colle thermofusible (50) ou d'un adhésif sur la deuxième face principale (38) et/ou la première face principale (32) de la deuxième couche (30), et
- chauffage d'au moins une des couches (20,30) et expansion de la mousse thermo-expansible, le cas échéant avec formation d'espaces creux (36,37).

15. Procédé selon la revendication 12 ou 13, comprenant les étapes suivantes :
- application d'une couche de colle thermofusible (50) sur les deux faces principales (32,38) de la deuxième couche perforée (30),
- pose de la deuxième couche (30) sur le composant (8) destiné à être amélioré du point de vue acoustique et de la première couche (20) sur la deuxième couche (30), de préférence par pression, et
- chauffage de la première et/ou de la deuxième couche (20,30), en particulier à env. 80°C à 190°C, de ce fait fusion des couches de colle thermofusible (50), fusion de la deuxième couche (30) sur le composant (8) et fusion de la première couche (20) sur la deuxième couche (30).

16. Procédé selon l'une quelconque des revendications 12-14, comprenant les étapes suivantes :
- application d'un adhésif sur la deuxième face principale (38) de la deuxième couche perforée (30) et application d'une couche de colle thermofusible (50) sur la première face principale (32) de la deuxième couche (30) ou sur la première couche (20),
- pose de la deuxième couche (30) sur le composant (8) et de la première couche (20) sur la deuxième couche (30),
- pression de la deuxième couche (30) sur le composant (8) et
- chauffage de la première couche (20), en particulier à env. 80°C à 190°C, de ce fait fusion de la couche de colle thermofusible (50) et de la première couche (20) sur la deuxième couche (30).

17. Procédé selon l'une quelconque des revendications 12-14, comprenant les étapes suivantes :
- application d'une couche de colle thermofusible (50) sur la deuxième face principale (38) de la deuxième couche perforée (30) et application d'un adhésif sur la première face principale (32) de la deuxième couche (30) ou sur la première couche (20),
- pression de la première couche (20) sur la deuxième couche (30),
- chauffage de la deuxième couche (20), en particulier à env. 80° C à 190° C, de ce fait fusion de la couche de colle thermofusible (50) et des deux couches sur le composant (8).

18. Procédé selon l'une quelconque des revendications 12 ou 13, comprenant les étapes suivantes :
- application d'un adhésif sur la première face principale (32) de la deuxième couche perforée (30) et application d'une couche de colle thermofusible (50) sur la deuxième face principale (38) de la deuxième couche (30),
- assemblage de la première et de la deuxième couche (20,30) au moyen de l'adhésif et pose de l'ensemble composite de couches sur le composant (8) et
- chauffage de l'ensemble composite de couches (20,30), en particulier à env. 80°C à 190°C, de ce fait fusion de la couche de colle thermofusible (50) et des deux couches sur le composant (8).
